(19) Europäisches Patentamt
European Patent Office
Office européen des brevets

(11) **EP 3 779 785 B1**

(12) **FASCICULE DE BREVET EUROPEEN**

(45) Date de publication et mention
de la délivrance du brevet:
**04.12.2024 Bulletin 2024/49**

(21) Numéro de dépôt: **20197319.5**

(22) Date de dépôt: **02.07.2013**

(51) Classification Internationale des Brevets (IPC):
***G06V 10/22*** *(2022.01)*

(52) Classification Coopérative des Brevets (CPC):
**G06V 10/225**

(54) **ENSEMBLE DE SURFACES IMPRIMÉES ET DISPOSITIF ET PROCÉDÉ DE TRAITEMENT D'IMAGES D'UNE TELLE SURFACE IMPRIMÉE**

BEDRUCKTE OBERFLÄCHE UND VORRICHTUNG UND VERFAHREN ZUR BILDVERARBEITUNG EINER SOLCHEN BEDRUCKTEN OBERFLÄCHE

PRINTED SURFACE AND DEVICE AND METHOD FOR PROCESSING IMAGES OF SUCH A PRINTED SURFACE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.07.2012 FR 1256475**

(43) Date de publication de la demande:
**17.02.2021 Bulletin 2021/07**

(62) Numéro(s) de document de la (des) demande(s)
initiale(s) en application de l'article 76 CBE:
**13174643.0 / 2 682 902**

(73) Titulaire: **Holdham**
**14200 Hérouville-Saint-Clair (FR)**

(72) Inventeur: **DESCHENES, Laurent**
**14610 CAIRON (FR)**

(74) Mandataire: **Berger, Helmut**
**Weinstein Services & Conseils**
**2-10 Avenue Marc Sangnier**
**92390 Villeneuve-la-Garenne (FR)**

(56) Documents cités:
**EP-A1- 1 833 022          EP-A2- 2 333 696**
**WO-A1-01/80150          US-A1- 2010 239 118**
**US-A1- 2012 069 383**

**Description**

L'invention concerne un dispositif de traitement automatique d'une image de surfaces imprimées comportant au moins un marqueur de position d'une zone principale. De plus, l'invention concerne un ensemble de surfaces imprimées de différents modèles dont l'acquisition d'une image est destinée à être traitée par le dispositif de traitement précédent. Enfin, l'invention concerne aussi un procédé de traitement d'une image d'une telle surface imprimée dans un dispositif de traitement d'une telle image.

Le document US 2012/0069383 décrit un dispositif de traitement d'une image d'une surface imprimée comportant une zone principale délimitée par trois marqueurs de position identiques et par un marqueur d'orientation. Les quatre marqueurs précédents permettent de définir la zone principale à extraire de l'image et le marqueur d'orientation permet de différencier le haut du bas de la zone principale ainsi que de déterminer la position relative d'une zone de saisie de caractères constituée de traits sur des digits 7-segments. Dans ce document, le traitement de l'image repose sur un modèle unique de la zone principale à extraire reproduit de manière homothétique sous différents formats de page : petit, moyen ou large. Une telle reproduction homothétique garantit un rapport largeur sur hauteur constant de la zone principale, ce qui permet de corriger l'effet de perspective par la méthode dite "Keystone", qui permet de transformer, en première approximation, une forme trapézoïdale isocèle de la zone principale photographiée de manière inclinée en une forme rectangulaire afin d'obtenir une image corrigée de la zone principale comme si la surface imprimée avait été lue par un scanner de documents à plat.

Toutefois, l'inconvénient du dispositif du document US 20120069383 est le format et le type unique que doivent respecter la zone principale qui doit être extraite de l'image acquise ainsi que la position unique des zones secondaires dans la zone principale et faisant l'objet d'un post traitement.

Un but de l'invention est de fournir un dispositif de traitement d'une image de surfaces imprimées comportant une zone principale à extraire qui puisse traiter précisément et spécifiquement des zones principales de formats et modèles différents ou plusieurs zones principales de formats ou types différents capturées dans une même image.

A cette fin, il est prévu, selon l'invention, un dispositif de traitement automatique d'une image de surfaces imprimées comportant au moins un marqueur de position d'une zone principale à extraire d'une surface imprimée de l'image, le dispositif comprenant :

    des moyens d'acquisition de l'image de surfaces imprimées ;
    des moyens d'identification du au moins un marqueur de position dans l'image de surfaces imprimées ;
et des moyens d'extraction de la zone principale située dans le plan de l'image en fonction du au moins un marqueur de position ainsi identifié, caractérisé en ce que le dispositif comporte en outre des moyens d'identification et de décodage d'un microcode, associé à la zone principale à extraire, dans l'image de surfaces imprimées, le microcode étant contenu dans une zone associée à la zone principale à extraire et positionnée de manière prédéterminée par rapport à
la zone principale à extraire à l'extérieur de la zone principale à extraire, et les moyens d'extraction étant configurés pour déterminer en fonction du microcode un modèle de la zone principale à extraire parmi plusieurs modèles différents, et pour corriger un éventuel effet de perspective dans l'image en fonction du modèle déterminé.

Ainsi, l'identification et le décodage par le dispositif d'un microcode prévu à cet effet et associé à la zone principale à extraire permet de fournir au dispositif de traitement un ensemble d'informations concernant ladite zone principale à extraire. Ceci permet au dispositif de traitement selon l'invention de traiter automatiquement, précisément et spécifiquement la zone principale à extraire, quelle que soit sa forme. Au surplus, si plusieurs zones principales à extraire ont été imagées dans la même image, leurs microcodes associés permettent de les traiter indépendamment les unes des autres en fonction de leurs propres informations contenues dans le microcode associé à chacune des zones principales à extraire.

Avantageusement, mais facultativement, le dispositif de traitement selon l'invention comporte au moins l'une des caractéristiques techniques suivantes :

- les moyens d'identification et de décodage du microcode déterminent, à partir du microcode associé à la zone principale à extraire, des dimensions de la zone principale à extraire ;
- les moyens d'identification et de décodage du microcode déterminent, à partir du microcode associé à la zone principale à extraire, un type de la zone principale à extraire ;
- les moyens d'identification et de décodage du microcode déterminent, à partir du microcode associé à la zone principale à extraire, une séquence de traitement à appliquer spécifique de la zone principale à extraire ;
- les moyens d'identification et de décodage du microcode déterminent, à partir du microcode associé à la zone principale à extraire, une ou plusieurs zones secondaires relatives à la zone principale à extraire ;
- les moyens d'identification et de décodage du microcode déterminent, à partir du microcode associé à la zone principale à extraire, des post traitements à appliquer sur les zones secondaires ;

et,

- la séquence de traitement est une transformation de l'image de la zone principale dans le plan sans déformation.

D'autre part, il est prévu aussi selon l'invention un ensemble de surfaces imprimées de différents modèles, comportant chacune une zone principale et au moins un marqueur de position associé à la zone principale, caractérisé en ce que chaque surface imprimée comporte en outre une zone associée à la zone principale contenant un microcode associé à la zone principale, la zone associée étant positionné de manière prédéterminée par rapport à la zone principale à l'extérieur de la zone principale à extraire, le microcode fournissant le modèle de la zone principale associée parmi plusieurs modèles différents.

Avantageusement, mais facultativement, la surface imprimée selon l'invention comporte au moins l'une des caractéristiques techniques suivantes :

- le microcode comporte des informations sur la zone principale associée correspondant à au moins l'une parmi les dimensions, le type, les zones secondaires, la séquence de traitement à appliquer à la zone principale et les post traitements à appliquer aux zones secondaires ;
- le marqueur de position est délimité par un contour entourant un symbole distinctif ;
- le marqueur de position est un cadre entourant la zone principale associée ;

- elle comporte deux marqueurs de positions distincts s'étendant le long de deux côtés opposés de la zone principale ;
- elle comporte un ensemble de marqueurs de position distincts, chaque marqueur de position de l'ensemble de marqueurs de positions étant placé à chaque coin de la zone principale ; et,
- elle comporte plusieurs zones principales, chacune des zones principales étant associée à au moins un marqueur de position et un microcode.

De plus, il est prévu aussi selon l'invention un procédé de traitement d'une image d'une surface imprimée présentant au moins l'une des caractéristiques techniques précédentes dans un dispositif de traitement présentant au moins l'une des caractéristiques précédentes, le procédé de traitement comportant les étapes de :

- acquisition d'une image de la surface imprimée par les moyens d'acquisition ;
- identification du au moins un marqueur de position d'une zone principale à extraire par les moyens d'identification dans l'image précédemment acquise ;
- identification de la zone contenant le microcode associé à la zone à extraire correspondant au marqueur de position précédemment identifié et décodage du microcode ;
- extraction de la zone principale de l'image acquise par les moyens d'extraction en fonction du au moins un marqueur de position identifié et du microcode décodé, l'étape d'extraction de la zone principale comportant une étape de correction d'une perspective de la zone principale dans l'image acquise en fonction de paramètres dimensionnels de la zone principale donnés par le microcode.

Avantageusement, mais facultativement, le procédé de traitement selon l'invention comporte au moins l'une des caractéristiques techniques additionnelles suivantes :

- l'étape d'extraction de la zone principale comporte une étape de correction d'une perspective de la zone principale dans l'image acquise en fonction de paramètres dimensionnels de la zone principale donnés par le microcode ; et,
- l'étape d'extraction de la zone principale comporte une étape de post-traitement de la perspective corrigée de la zone principale après analyse des zones secondaires prédéfinies par des paramètres de position et de dimensions donnés par le microcode.

D'autres avantages et caractéristiques de l'invention apparaitront lors de la description ci-après d'un mode de réalisation de l'invention ainsi que deux variantes. Aux dessins annexés :

- la figure 1 illustre une image acquise d'une surface imprimée selon l'invention destinée à être traitée dans un dispositif de traitement selon l'invention et suivant un procédé de traitement selon l'invention ;
- la figure 2 est un schéma illustrant une méthode de transformation affine d'un quadrilatère en rectangle dans le plan ;
- la figure 3 est un organigramme illustrant le procédé de traitement d'une image selon l'invention ;
- la figure 4 est une vue de dessus d'un premier mode de réalisation d'une surface imprimée selon l'invention ;
- la figure 5 est un schéma illustrant la zone principale extraite depuis la surface imprimée de la figure 4 associée à son microcode et à une zone secondaire sous forme d'une marge ;
- les figures 6 et 7 illustrent des variantes de réalisation des marqueurs de position associés à la zone principale d'une surface imprimée selon l'invention ;
- la figure 8 est une vue de dessus d'une variante de réalisation d'une surface imprimée selon l'invention.

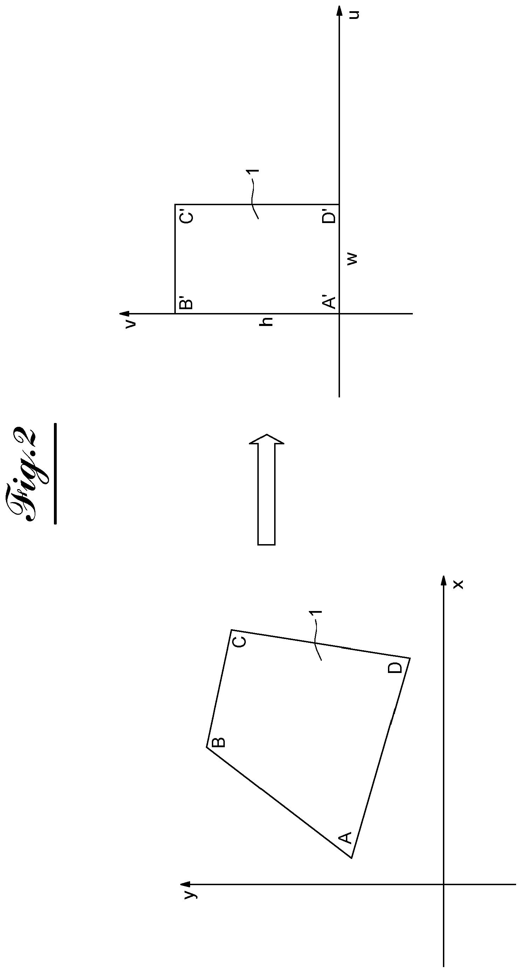

D'un point de vue mathématique, en référence à la figure 2, la zone principale 1 à extraire de l'image acquise est contenue dans un quadrilatère (A,B,C,D) défini par les coordonnées (x,y) de chacun des quatre coins (A,B,C,D) dans le plan de l'image. Afin de corriger l'effet de perspective lors de l'acquisition de l'image, il faut projeter l'image de la zone principale 1 contenue dans le quadrilatère (A,B,C,D) dans un rectangle (A',B',C',D') dont les coordonnées (u,v) des quatre coins (A',B',C',D') dépendent de la dimension réelle de la zone principale 1 à extraire. En utilisant des méthodes de calcul de type transformation affine dans le plan issue de la « transformation homogène affine 3D» appliquée à la modélisation de la perspective par caméra, il est possible de déterminer la transformation de chacun des points contenus dans le quadrilatère (A,B,C,D) de l'image acquise afin de corriger et de restituer le contenu de la zone principale à extraire 1 dans le rectangle (A',B',C',D'), et ce sans déformation. Cette transformation affine répond à la paire d'équations suivantes pour chacun des points :

$$u = \frac{a.x + b.y + c}{g.x + h.y + i} \qquad v = \frac{d.x + e.y + f}{g.x + h.y + i}$$

où (x,y) sont les coordonnées d'un point du quadrilatère (A,B,C,D) dans le plan de l'image acquise ;
(u,v) sont les coordonnées du point équivalent après transformation et correction dans le rectangle (A',B',C',D') dans le plan ; et
a,b,c,d,e,f,g,h,i sont les paramètres de la transformation calculés à partir des coordonnées des coins du quadrilatère (A,B,C,D) et du rectangle (A',B',C',D').

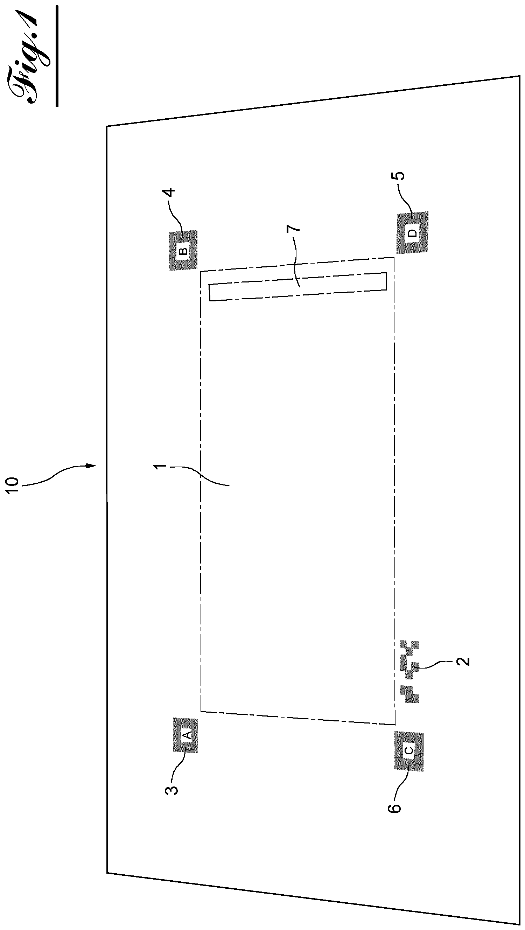

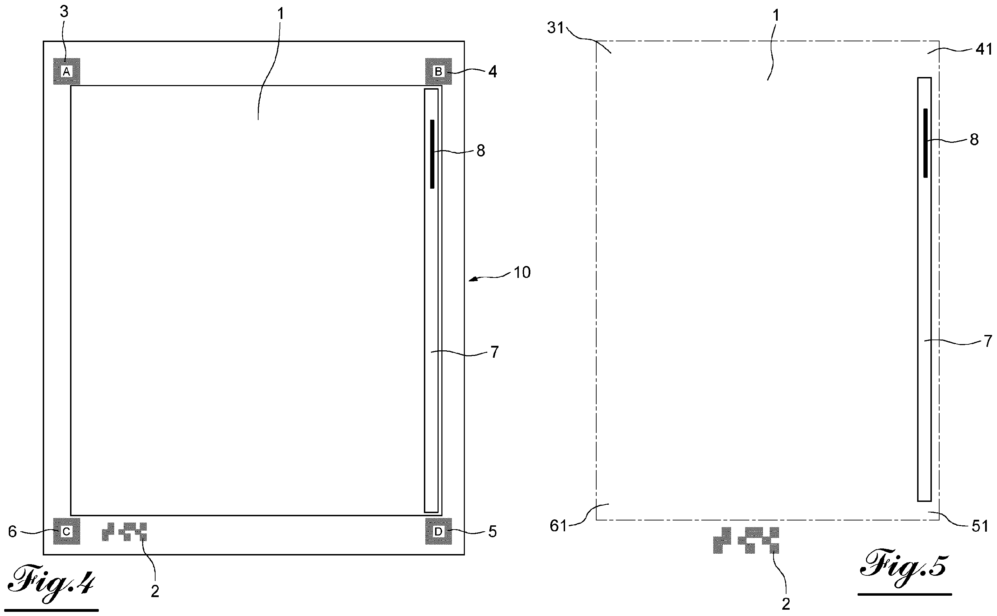

En référence aux figures 1 et 4, nous allons décrire une surface imprimée 10 selon l'invention. La surface imprimée 10 est ici une feuille de bloc-notes, par exemple. La surface imprimée 10 comporte une zone principale 1 qui est destinée à être extraite après avoir acquis une image de la surface imprimée 10 selon un procédé de traitement de l'image selon l'invention dans un dispositif de traitement d'une image selon l'invention, le procédé et le dispositif allant être décrits ultérieurement. Associé à la zone principale 1 à extraire, la surface imprimée 10 selon l'invention comporte une série de marqueurs 3,4,5,6 associés à cette zone principale 1 à extraire. Ici, les marqueurs de position sont au nombre de quatre et sont situés au voisinage des quatre coins formant le quadrilatère de la zone principale 1 à extraire. D'autre part, la zone imprimée 10 selon l'invention comporte une zone contenant un microcode 2 associé à la zone principale 1 à extraire. La zone contenant le microcode 2 est positionnée de manière prédéterminée par rapport à la série de marqueurs de positions 3,4,5,6 associés à la zone principale 1 à extraire, à l'extérieur de la zone principale à extraire.

D'autre part, la surface imprimée 10 selon l'invention comporte en outre une zone secondaire 7 de traitement qui est optionnelle et qui est ici imprimée sous la forme d'une marge, ici verticale, dont la position est prédéfinie par rapport à la zone principale 1 à extraire par le microcode 2. Cette zone secondaire 7 permet à un utilisateur de la surface imprimée 10 selon l'invention d'indiquer par un trait 8 une partie de la zone principale 1 à extraire à laquelle le dispositif de traitement selon l'invention et/ou le procédé de traitement selon l'invention appliquent un post-traitement spécifique une fois la zone principale 1 extraite et la zone secondaire 7 extraite de l'image projeté sans déformation de la zone principale 1 puis analysée pour déterminer la position des zones de notes à extraire à partir de la zone secondaire 7. L'utilisateur de la surface imprimée 10 selon l'invention peut ainsi indiquer des notes importantes à regrouper.

La série de marqueurs de position 3,4,5,6 va permettre de déterminer les quatre coins de la zone principale 4 à extraire et comprend, ici, quatre marqueurs de position différents et distincts les uns des autres. Ainsi il est possible d'opérer un filtrage des différents marqueurs de position apparaissant dans l'image acquise de la surface imprimée 10 selon l'invention, en particulier si l'image comprend plusieurs zones principales 1 à extraire côte-à-côte. Par exemple, ici, le marqueur 3 comprend la lettre "A" entourée d'un contour carré et le marqueur 6 comprend la lettre "C" elle-même entourée d'un même contour carré. Ces deux marqueurs de positions 2 et 6 sont situés à gauche des marqueurs 4, comprenant une lettre "B" entourée d'un contour carré, et 5, comprenant une lettre "D" entourée d'un contour carré. Une telle disposition prédéfinie des quatre marqueurs de position 3,4,5,6 permet de déterminer la zone principale 1 à extraire à laquelle ils sont associés et de filtrer la présence d'éventuels autres marqueurs de positions associés à d'autres zones principales.

En référence à la figure 5, les coordonnées de la zone principale 1 à extraire sont définies par les quatre coins 31,41,51,61 d'un rectangle délimitant ladite zone principale 1 à laquelle est associé un microcode 2 dont les coordonnées de la zone le contenant sont prédéfinies par rapport à ladite zone principale 1. Les coordonnées des quatre coins de la zone principale 1 sont déduites de la position et de la forme du ou des marqueurs de position. De ce fait, selon l'invention, les coordonnées des quatre coins de la zone principale 1 à extraire sont déterminées à l'aide des coordonnées d'au moins un marqueur de position identifiable par rapport aux autres contours pouvant apparaitre dans l'image, en particulier dans la zone principale 1 à extraire.

De manière générale, selon l'invention, le marqueur de position est défini par un contour de forme rectangulaire imprimé sur la surface imprimée 10 selon l'invention dans une couleur différente d'une couleur d'un fond de la surface imprimée 10 selon l'invention. A l'intérieur de ce contour, est imprimée une image ou un symbole permettant d'identifier de manière unique le marqueur de position comme tel et distinct des éventuels autres marqueurs de position, si plusieurs de ces marqueurs de position sont utilisés pour calculer les coordonnées de quatre coins 31,41,51,61 de la zone principale 1 à extraire ainsi que des coordonnées de la zone contenant le microcode 2 associé à la zone principale 1 à extraire.

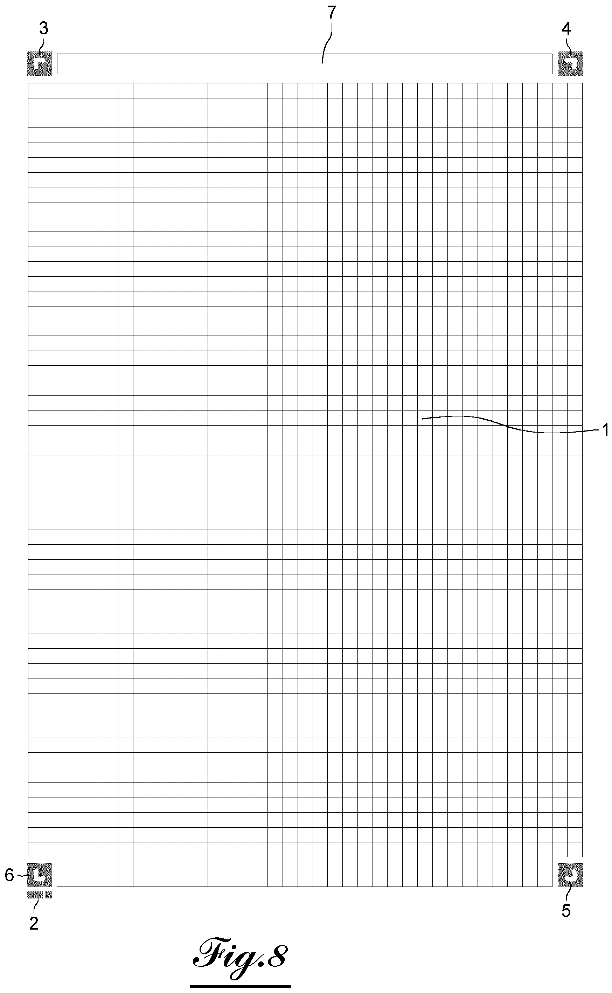

Par exemple, comme illustré à la figure 4, les marqueurs de position 3,4,5 et 6 comportent un contour de forme carrée à l'intérieur duquel est positionnée une lettre de l'alphabet en lettre majuscule. Ici, quatre marqueurs de position sont utilisés et, de ce fait, quatre lettres différentes de l'alphabet sont utilisées pour les rendre distincts les uns des autres. En variante de réalisation illustrée à la figure 8, les marqueurs de position 3,4,5 et 6 comprennent un même contour carré entourant un symbole représentant un onglet dont l'orientation est propre à un marqueur de position donné.

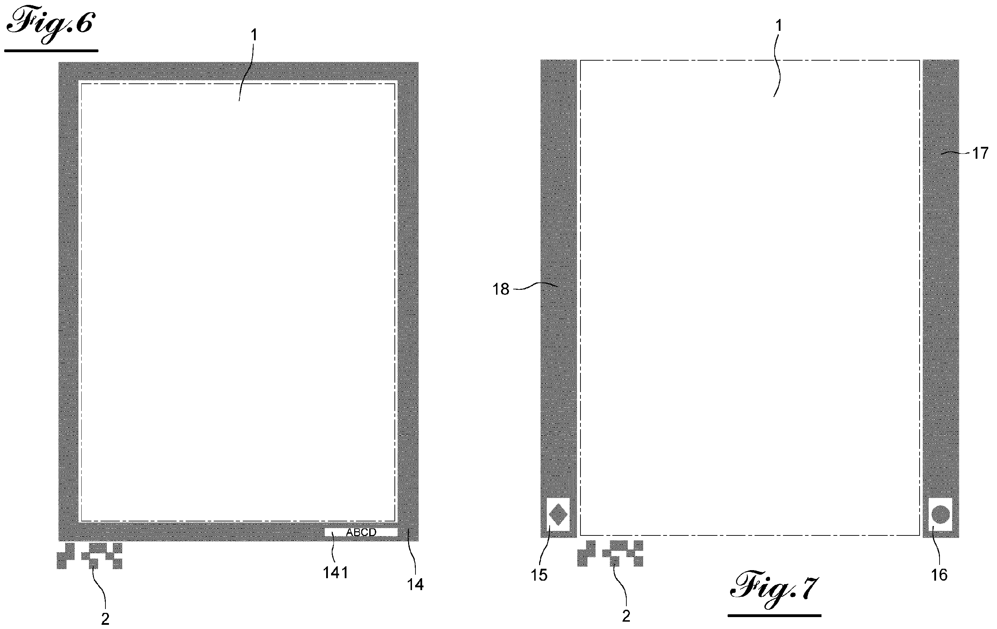

Un deuxième mode de réalisation d'un marqueur de position est illustré en figure 6. Le marqueur de position 14 se présente ici sous la forme d'un contour rectangulaire entourant la zone principale 1 à extraire. Dans l'épaisseur du contour du marqueur de position 14 est placée une image ou un symbole 141 dans une zone rectangulaire permettant son identification comme marqueur de position distinct d'autres contours rectangulaires pouvant apparaitre éventuellement dans l'image, comme, par exemple, des réglures. A partir de ce marqueur de positionnement 14, un microcode 2 associé à la zone principale 1 est identifiable dans une zone définie. La position prédéfinie de la zone contenant le microcode 2 est établie par rapport aux coordonnées des quatre coins 31,41,51,61 de la zone principale 1 et, donc, par rapport aux coordonnées des quatre coins extérieurs du contour formant le marqueur de position 14. La zone contenant le microcode 2 est située à l'extérieur dudit contour.

En référence à la figure 7, est illustré un troisième mode de réalisation de marqueurs de position. Ici, deux marqueurs de position distincts 17,18 sont utilisés et se présentent tous deux sous la forme de deux barres verticales situées de part et d'autre de la zone principale 1 à extraire. En variante de réalisation, les deux barres formant les marqueurs de positionnement 17, 18 peuvent être horizontales et situées respectivement au-dessus et au-dessous de la zone principale 1 à extraire. Dans l'épaisseur de chacune des barres, est placée une image ou un symbole 16,15 dans une zone rectangulaire prévue dans l'épaisseur de chacune des barres et permettant l'identification du marqueur comme un marqueur de position. Bien entendu, chaque marqueur de position 17,18 de la zone principale 1 à extraire se caractérise par un symbole différent et se distingue d'un simple contour rectangulaire pouvant apparaitre éventuellement dans l'image de la zone principale 1. Ici, un losange 15 est utilisé pour le marqueur de position 18 alors qu'un rond 16 est utilisé pour le marqueur de position 17. De nouveau, un microcode 2 est associé à la zone principale 1 déterminée par les deux marqueurs de position 17,18 et est contenu dans une zone dont la position est établie par rapport aux coordonnées des quatre coins de la zone principale et donc par rapport aux coordonnées des coins extérieurs du contour de chaque marqueur de position 17,18, à l'extérieur de la zone principale à extraire.

Le microcode 2 se présente sous la forme d'un code-barres bidimensionnel, comme cela est illustré aux figures 1 et 4 à 7, ou encore unidimensionnel comme illustré à la figure 8. Ce code barres bidimensionnel peut être un code de couleur bidimensionnel. Toutes autres dispositions de code-barres (Data matrix, QRCode, ...), peuvent être utilisées indifféremment. L'identification puis le décodage du microcode 2 permet de fournir une valeur ou un ensemble de valeurs permettant de caractériser la zone principale 1 à extraire par le procédé de traitement d'une image selon l'invention dans un dispositif de traitement d'une image selon l'invention. Les informations associées à la ou les valeurs contenues dans le microcode sont le modèle de la zone principale 1, les dimensions de la zone principale 1 ainsi qu'éventuellement les position et dimensions d'une ou plusieurs zones secondaires 7 et la séquence de traitement spécifique à appliquer à la zone principale 1 et le post-traitement spécifique à appliquer après analyse de chaque zone secondaire 7. D'autres informations concernant la zone principale 1 à extraire peuvent être prévues.

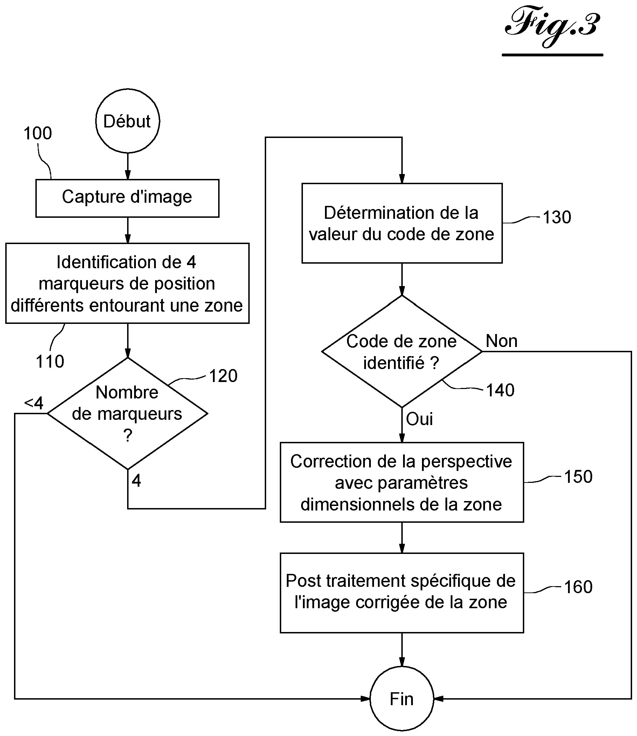

Maintenant, en référence à la figure 3, nous allons décrire le procédé de traitement d'une image selon l'invention qui permet d'extraire la zone principale 1 de la surface imprimée 10 selon l'invention. Dans un premier temps, une image de la surface imprimée 10 selon l'invention est acquise, lors d'une étape 100. Une telle image acquise est illustrée par exemple à la figure 1. A partir de cette image, le procédé de traitement d'une image selon l'invention identifie un ou une série de marqueurs de position associé à la zone principale 1 à extraire, dans une étape 110. Dans le cadre de l'image illustrée à la figure 1, le procédé de traitement d'une image selon l'invention identifie les quatre marqueurs de position 3,4,5,6 entourant la zone principale 1 à extraire. Dans le cadre du mode de réalisation de la figure 6, le procédé de traitement d'une image selon l'invention identifie le contour du marqueur 14, alors que dans le mode de réalisation illustré à la figure 7, le procédé de traitement d'une image selon l'invention identifie les deux marqueurs en forme de bande 17,18.

Dans une étape 120, le procédé de traitement d'une image selon l'invention vérifie que le nombre de marqueurs adéquat prévu pour la zone 1 à extraire a bien été identifié. Si ce n'est pas le cas, le procédé de traitement d'une image selon l'invention met fin à son fonctionnement.

Si le nombre de marqueurs identifié est celui prévu, dans une étape 130, le procédé de traitement d'une image selon l'invention détermine la ou les valeurs contenues dans le microcode 2 associé à la zone principale 1 à extraire. Pour cela, le procédé de traitement d'une image selon l'invention identifie la zone contenant le microcode 2 dans l'image acquise à partir des informations fournies par les marqueurs de position préalablement identifiés associés à la zone principale 1 à extraire. Une fois identifié, le procédé de traitement d'une image selon l'invention procède à une lecture et un décodage du microcode 2 afin d'en extraire la ou les valeurs qui permettent au procédé de traitement d'une image selon l'invention de déterminer un certain nombre d'informations associées à la zone principale 1 telles que son type ou les caractéristiques des zones secondaires 7, ses dimensions, la séquence de traitement spécifique à appliquer à ladite zone principale 1 et aux zones secondaires 7. Dans une étape 140, le procédé de traitement d'une image selon l'invention vérifie si le microcode 2 associé à la zone principale 1 a bien été identifié. Si ce n'est pas le cas, le procédé de traitement d'une image selon l'invention met fin à son fonctionnement.

Dans le cas contraire, le microcode 2 ayant été parfaitement identifié et décodé, le procédé de traitement d'une image selon l'invention effectue, lors d'une étape 150, une extraction de la zone principale 1 de l'image précédemment acquise en fonction d'une part des marqueurs de position préalablement identifiés et associés à ladite zone principale 1 à extraire et du microcode 2 préalablement identifié et décodé associé à ladite zone principale 1 à extraire. Durant cette étape d'extraction, le procédé de traitement d'une image selon l'invention détermine d'abord les paramètres a,b,c,d,e,f,g,h,i de la transformation affine à partir :

- des quatre coins du quadrilatère (A,B,C,D) représentant la zone principale 1 à extraire dans l'image acquise, les quatre coins ayant été eux même déterminés à partir de l'identification préalable des marqueurs de positions associés à la zone principale 1 à extraire ; et,
- des quatre coins du rectangle (A',B',C',D') calculés à partir des informations déterminées à partir du microcode associé à la zone principale 1 à extraire.

Puis, le procédé de traitement d'une image selon l'invention réalise une étape de correction de la perspective de la zone principale 1 à extraire dans l'image acquise en fonction des paramètres dimensionnels de la zone principale 1 à extraire obtenue suite au décodage du microcode 2 associé à ladite zone principale 1 à extraire, et à partir des paramètres a,b,c,d,e,f,g,h,i précédemment déterminés.

Ensuite, dans une étape 160, le procédé de traitement d'une image selon l'invention procède à l'application d'éventuels post-traitements - spécifiques après analyse des zones secondaires 7 extraites de l'image projetée sans déformation de la zone principale 1. Ces post-traitements sont déclenchés si des informations associées au microcode 2 préalablement décodé le prévoient. Une fois l'étape 160 réalisée, le procédé de traitement d'une image selon l'invention procède à une sauvegarde des résultats de son fonctionnement.

Le procédé de traitement d'une image selon l'invention préalablement décrit est mis en œuvre dans un dispositif de traitement d'une image de surface imprimée selon l'invention qui comporte, à cet effet, au moins des moyens d'acquisition d'une image de la surface imprimée. D'autre part, le dispositif de traitement selon l'invention comporte des moyens d'identification d'au moins un marqueur de position dans une image acquise par les moyens d'acquisition ainsi que de moyens d'identification et de décodage d'un microcode 2 en fonction d'au moins un marqueur de position identifié. De plus, le dispositif de traitement d'une image selon l'invention comporte des moyens d'extraction d'une zone principale 1 située dans le plan d'une image acquise en fonction d'au moins un marqueur de position identifié et d'un microcode identifié et décodé. Les moyens d'extraction de la zone principale et des zones secondaires sont agencés de sorte à pouvoir appliquer une séquence de traitement spécifique à la zone principale repérée et aux zones secondaires prédéterminées en fonction des informations décodées du microcode identifié et associé à la zone principale à traiter. En particulier, cette séquence de traitement spécifique est une transformation de l'image de la zone principale dans le plan sans déformation tel qu'illustré à la figure 2 et préalablement discuté dans la description. Les moyens d'extraction comportent une unité de calcul.

Enfin, le dispositif de traitement d'une image selon l'invention comporte des moyens de stockage qui ont une double fonction :

- d'une part, de stocker les informations concernant une zone principale associée à une valeur ou des valeurs de microcode 2 ;
- d'autre part, de sauvegarder les résultats fournis par les moyens d'extraction à partir de l'image acquise après identification de la zone principale et des zones secondaires à extraire.

**Revendications**

1. Dispositif de traitement automatique d'une image de surfaces imprimées comportant au moins un marqueur de position (3,4,5,6;14;17,18) d'une zone principale à extraire (1) d'une surface imprimée (10) de l'image, le dispositif comprenant :

   - des moyens d'acquisition de l'image de surfaces imprimées ;
   - des moyens d'identification du au moins un marqueur de position dans l'image de surfaces imprimées ; et
   - des moyens d'extraction de la zone principale située dans le plan de l'image en fonction du au moins un marqueur de position ainsi identifié,

   **caractérisé en ce que** le dispositif comporte en outre des moyens d'identification et de décodage d'un microcode (2), associé à la zone principale à extraire, dans l'image de surfaces imprimées, le microcode étant contenu dans une zone associée à la zone principale à extraire et positionnée de manière prédéterminée par rapport à la zone principale à extraire à l'extérieur de la zone principale à extraire, et les moyens d'extraction étant configurés pour déterminer en fonction du microcode un modèle de la zone principale à extraire parmi plusieurs modèles différents, et pour corriger un éventuel effet de perspective dans l'image en fonction du modèle déterminé.

2. Dispositif de traitement selon la revendication 1, **caractérisé en ce que** la position de la zone associée est établie par rapport aux coordonnées des quatre coins de la zone principale.

3. Dispositif de traitement selon la revendication 1 ou la revendication 2, **caractérisé en ce que** le microcode est un code-barres.

4. Dispositif de traitement selon l'une des revendications 1 à 3, **caractérisé en ce que** les moyens d'identification et de décodage du microcode déterminent, à partir du microcode associé à la zone principale à extraire, des dimensions de la zone principale à extraire.

5. Dispositif de traitement selon l'une des revendications 1 à 4, **caractérisé en ce que** les moyens d'identification et de décodage du microcode déterminent, à partir du microcode associé à la zone principale à extraire, un type de la zone principale à extraire.

6. Dispositif de traitement selon l'une des revendications 1 à 5, **caractérisé en ce que** les moyens d'identification et de décodage du microcode déterminent, à partir du microcode associé à la zone principale à extraire, une séquence de traitement à appliquer spécifique de la zone principale à extraire.

7. Dispositif de traitement selon l'une des revendications 1 à 6, **caractérisé en ce que** le dispositif effectue un filtrage des différents marqueurs de position apparaissant dans l'image si l'image comprend plusieurs zones principales en distinguant les marqueurs de position associés.

8. Ensemble de surfaces imprimées (10) de différents modèles, comportant chacune une zone principale (1) et au moins un marqueur de position (3,4,5,6;14;17,18) associé à la zone principale, **caractérisé en ce que** chaque surface imprimée comporte en outre une zone associée à la zone principale contenant un microcode (2) associé à la zone principale, la zone associée étant positionné de manière prédéterminée par rapport à la zone principale à l'extérieur de la zone principale à extraire, le microcode fournissant le modèle de la zone principale associée parmi plusieurs modèles différents.

9. Ensemble de surfaces imprimées selon la revendication 8, **caractérisé en ce que** le microcode comporte des informations sur la zone principale associée correspondant à au moins l'un parmi les dimensions, le type et la séquence de traitement à appliquer à la zone principale.

10. Ensemble de surfaces imprimées selon la revendication 9, **caractérisé en ce qu'**une desdites surfaces comporte un ensemble de marqueurs de position distincts (3,4,5,6), chaque marqueur de position de l'ensemble de marqueurs de positions étant placé à un coin (31,41,51,61) de la zone principale.

11. Ensemble de surfaces imprimées selon la revendication 9 ou la revendication 10, **caractérisé en ce qu'**elles comportent chacune plusieurs zones principales, chacune des zones principales étant associée à au moins un marqueur de position et un microcode.

12. Procédé de traitement d'une image d'une surface imprimée (10) d'un ensemble selon l'une des revendications 8 à 11 dans un dispositif de traitement selon l'une des revendications 1 à 7, le procédé de traitement comportant des étapes de :

    - acquisition (100) d'une image de la surface imprimée par les moyens d'acquisition ;
    - identification (110,120) du au moins un marqueur de position d'une zone principale à extraire par les moyens d'identification dans l'image précédemment acquise ;
    - identification (130,140) de la zone contenant le microcode associé à la zone à extraire correspondant au marqueur de position précédemment identifié et décodage du microcode ;
    - extraction (150,160) de la zone principale de l'image acquise par les moyens d'extraction en fonction du au moins un marqueur de position identifié et du microcode décodé, l'étape d'extraction de la zone principale comportant une étape de correction (150) d'une perspective de la zone principale dans l'image acquise en fonction de paramètres dimensionnels de la zone principale donnés par le microcode.

13. Procédé de traitement selon la revendication 12, **caractérisé en ce que** l'étape d'extraction de la zone principale comporte une étape de post-traitement (160) de l'image corrigée de la zone principale après analyse des zones secondaires prédéfinies par des paramètres de position et de dimensions donnés par le microcode.

## Patentansprüche

1. Vorrichtung zur automatischen Verarbeitung eines Bildes von bedruckten Oberflächen mit mindestens einem Positionsmarker (3, 4, 5, 6; 14; 17, 18) eines zu extrahierenden Hauptbereichs (1) einer bedruckten Oberfläche (10) des Bildes, wobei die Vorrichtung umfasst:

   - Mittel zum Erfassen des Bildes von bedruckten Oberflächen;
   - Mittel zum Identifizieren des mindestens einen Positionsmarkers in dem Bild von bedruckten Oberflächen; und
   - Mittel zum Extrahieren des Hauptbereichs, der sich in der Ebene des Bildes befindet, in Abhängigkeit von dem mindestens einen derart identifizierten Positionsmarker,

   **dadurch gekennzeichnet, dass** die Vorrichtung ferner Mittel zum Identifizieren und Dekodieren eines Mikrocodes (2), der dem zu extrahierenden Hauptbereich zugeordnet ist, in dem Bild von bedruckten Oberflächen umfasst, wobei der Mikrocode in einem Bereich enthalten ist, der dem zu extrahierenden Hauptbereich zugeordnet ist und in vorbestimmter Weise in Bezug auf den zu extrahierenden Hauptbereich positioniert ist, und die Extraktionsmittel ausgelegt sind, um in Abhängigkeit von dem Mikrocode ein Modell des zu extrahierenden Hauptbereichs aus mehreren verschiedenen Modellen zu bestimmen und um einen eventuellen perspektivischen Effekt in dem Bild in Abhängigkeit von dem bestimmten Modell zu korrigieren.

2. Verarbeitungsvorrichtung nach Anspruch 1, **dadurch gekennzeichnet, dass** die Position des zugeordneten Bereichs in Bezug auf die Koordinaten der vier Ecken des Hauptbereichs festgelegt wird.

3. Verarbeitungsvorrichtung nach Anspruch 1 oder Anspruch 2, **dadurch gekennzeichnet, dass** der Mikrocode ein Strichcode ist.

4. Verarbeitungsvorrichtung nach einem der Ansprüche 1 bis 3, **dadurch gekennzeichnet, dass** die Mittel zum Identifizieren und Dekodieren des Mikrocodes ausgehend von dem Mikrocode, der dem zu extrahierenden Hauptbereich zugeordnet ist, Abmessungen des zu extrahierenden Hauptbereichs bestimmen.

5. Verarbeitungsvorrichtung nach einem der Ansprüche 1 bis 4, **dadurch gekennzeichnet, dass** die Mittel zum Identifizieren und Dekodieren des Mikrocodes ausgehend von dem Mikrocode, der dem zu extrahierenden Hauptbereich zugeordnet ist, einen Typ des zu extrahierenden Hauptbereichs bestimmen.

6. Verarbeitungsvorrichtung nach einem der Ansprüche 1 bis 5, **dadurch gekennzeichnet, dass** die Mittel zum Identifizieren und Dekodieren des Mikrocodes ausgehend von dem Mikrocode, der dem zu extrahierenden Hauptbereich zugeordnet ist, eine anzuwendende Verarbeitungssequenz bestimmen, die spezifisch für den zu extrahierenden Hauptbereich ist.

7. Verarbeitungsvorrichtung nach einem der Ansprüche 1 bis 6, **dadurch gekennzeichnet, dass** die Vorrichtung eine Filterung der verschiedenen im Bild erscheinenden Positionsmarker durchführt, wenn das Bild mehrere Hauptbereiche umfasst, indem sie die zugeordneten Positionsmarker unterscheidet.

8. Anordnung von bedruckten Oberflächen (10) unterschiedlicher Modelle, von denen jede einen Hauptbereich (1) und mindestens einen Positionsmarker (3, 4, 5, 6; 14; 17, 18) aufweist, der dem Hauptbereich zugeordnet ist, **dadurch gekennzeichnet, dass** jede bedruckte Oberfläche ferner einen dem Hauptbereich zugeordneten Bereich aufweist, der einen dem Hauptbereich zugeordneten Mikrocode (2) enthält, wobei der zugeordnete Bereich in Bezug auf den Hauptbereich in einer vorbestimmten Weise positioniert ist und der Mikrocode das Modell des zugeordneten Hauptbereichs aus mehreren unterschiedlichen Modellen bereitstellt.

9. Anordnung von bedruckten Oberflächen nach Anspruch 8, **dadurch gekennzeichnet, dass** der Mikrocode Informationen über den zugehörigen Hauptbereich enthält, die mindestens einer von den Abmessungen, dem Typ und der auf den Hauptbereich anzuwendenden Verarbeitungssequenz entsprechen.

10. Anordnung von bedruckten Oberflächen nach Anspruch 9, **dadurch gekennzeichnet, dass** eine der Oberflächen eine Anordnung unterschiedlicher Positionsmarker (3, 4, 5, 6) aufweist, wobei jede Positionsmarker der Positionsmarkeranordnung an einer Ecke (31, 41, 51, 61) des Hauptbereichs angeordnet ist.

11. Anordnung von bedruckten Oberflächen nach Anspruch 9 oder 10, **dadurch gekennzeichnet, dass** sie jeweils mehrere Hauptbereiche aufweisen, wobei jeder der Hauptbereiche mindestens einem Positionsmarker und einem Mikrocode zugeordnet ist.

**12.** Verfahren zum Verarbeiten eines Bildes einer bedruckten Oberfläche (10) einer Anordnung nach einem der Ansprüche 8 bis 11 in einer Verarbeitungsvorrichtung nach einem der Ansprüche 1 bis 7, wobei das Verarbeitungsverfahren die folgenden Schritte umfasst:

- Erfassen (100) eines Bildes der bedruckten Oberfläche durch die Erfassungsmittel;
- Identifizieren (110, 120) des mindestens einen Positionsmarkers eines zu extrahierenden Hauptbereichs durch die Identifikationsmittel in dem zuvor erfassten Bild;
- Identifizieren (130, 140) des Bereichs, der den Mikrocode enthält, der dem zu extrahierenden Bereich zugeordnet ist, der dem zuvor identifizierten Positionsmarker entspricht, und Decodieren des Mikrocodes;
- Extrahieren (150, 160) des Hauptbereichs des Hauptbereichs des von den Extraktionsmitteln erfassten Bildes in Abhängigkeit von dem mindestens einen identifizierten Positionsmarker und dem decodierten Mikrocode, wobei der Extraktionsschritt des Hauptbereichs einen Korrekturschritt (150) einer Perspektive des Hauptbereichs in dem erfassten Bild in Abhängigkeit von Abmessungsparametern des Hauptbereichs, die durch den Mikrocode gegeben sind, umfasst.

**13.** Verarbeitungsverfahren nach Anspruch 12, **dadurch gekennzeichnet, dass** der Extraktionsschritt des Hauptbereichs einen Nachbearbeitungsschritt (160) des korrigierten Bildes des Hauptbereichs nach Analyse der Nebenbereiche umfasst, die durch vom Mikrocode gegebene Positions- und Abmessungsparameter vordefiniert sind.

**Claims**

**1.** A device for automatic processing of an image of printed surfaces comprising at least one position marker (3, 4, 5, 6; 14; 17, 18) of a main area to be extracted (1) from a printed surface (10) of the image, the device comprising:

- means for acquiring the image of printed surfaces;
- means for identifying at least one position marker in the image of printed surfaces; and
- means for extracting the main area located in the plane of the image based on the at least one position marker thus identified,

**characterized in that** the device further comprises means for identifying and decoding a microcode (2), associated with the main area to be extracted, in the image of printed surfaces, the microcode being contained in an area associated with the main area to be extracted and positioned in a predetermined manner relative to the main area to be extracted outside the main area to be extracted, and the extraction means being configured to determine, based on the microcode, a model of the main area to be extracted from among several different models, and to correct a possible perspective effect in the image based on the determined model.

**2.** The processing device according to claim 1, **characterized in that** the position of the associated area is established with respect to the coordinates of the four corners of the main area.

**3.** The processing device according to claim 1 or claim 2, **characterized in that** the microcode is a bar code.

**4.** The processing device according to one of claims 1 to 3, **characterized in that** the microcode identification and decoding means determine, from the microcode associated with the main area to be extracted, the dimensions of the main area to be extracted.

**5.** The processing device according to one of claims 1 to 4, **characterized in that** the microcode identification and decoding means determine, from the microcode associated with the main area to be extracted, a type of the main area to be extracted.

**6.** The processing device according to one of claims 1 to 5, **characterized in that** the microcode identification and decoding means determine, from the microcode associated with the main area to be extracted, a processing sequence to be applied specific to the main area to be extracted.

**7.** The processing device according to one of claims 1 to 6, **characterized in that** the device performs filtering of the various position markers appearing in the image if the image comprises several main areas, distinguishing the associated position markers.

**8.** A set of printed surfaces (10) of different models, each comprising a main area (1) and at least one position marker (3, 4, 5, 6; 14; 17, 18) associated with the main area, **characterized in that** each printed surface further comprises an area associated with the main area containing a microcode (2) associated with the main area, the associated area being positioned in a predetermined manner relative to the main area outside the main area to be extracted, the microcode providing the model of the associated main area among several different models.

**9.** The set of printed surfaces according to claim 8, **characterized in that** the microcode comprises information on the associated main area corresponding to at least one of the dimensions, type and processing sequence to be applied to the main area.

10. The set of printed surfaces according to claim 9, **characterized in that** one of said surfaces comprises a set of distinct position markers (3, 4, 5, 6), each position marker of the set of position markers being placed at a corner (31, 41, 51, 61) of the main area.

11. The set of printed surfaces according to claim 9 or claim 10, **characterized in that** they each comprise several main areas, each of the main areas being associated with at least one position marker and one microcode.

12. A method for processing an image of a printed surface (10) of a set according to one of claims 8 to 11 in a processing device according to one of claims 1 to 7, the processing method comprising steps of:

- acquiring (100) an image of the surface printed by the acquisition means;
- identifying (110, 120) at least one position marker of a main area to be extracted by the identification means in the previously acquired image;
- identifying (130, 140) the area containing the microcode associated with the area to be extracted corresponding to the previously identified position marker and decoding the microcode;
- extracting (150, 160) the main area of the image acquired by the extraction means based on at least one identified position marker and the decoded microcode, the step of extracting the main area comprising a step of correcting (150) a perspective of the main area in the acquired image based on dimensional parameters of the main area given by the microcode.

13. The processing method according to claim 12, **characterized in that** the step of extracting the main area comprises a step of post-processing (160) the corrected image of the main area after analysis of the secondary areas predefined by position and size parameters given by the microcode.

Fig.1

EP 3 779 785 B1

Fig.2

EP 3 779 785 B1

*Fig.3*

_Fig.5_

_Fig.4_

**Fig.6**

1

2

14

141

ABCD

**Fig.7**

17

1

16

2

15

18

*Fig.8*

## RÉFÉRENCES CITÉES DANS LA DESCRIPTION

**Documents brevets cités dans la description**

- US 20120069383 A